(19) Europäisches Patentamt
European Patent Office
Office européen des brevets

(11) **EP 4 293 580 A1**

(12) **EUROPEAN PATENT APPLICATION**

(43) Date of publication:
**20.12.2023 Bulletin 2023/51**

(51) International Patent Classification (IPC):
**G06N 3/126** (2023.01)

(21) Application number: **23158752.8**

(52) Cooperative Patent Classification (CPC):
**G06N 3/126**

(22) Date of filing: **27.02.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.06.2022 JP 2022098002**

(71) Applicant: **FUJITSU LIMITED**
**Kawasaki-shi, Kanagawa 211-8588 (JP)**

(72) Inventors:
• **MARUO, Akito**
  **Kawasaki-shi, Kanagawa, 211-8588 (JP)**
• **JIPPO, Hideyuki**
  **Kawasaki-shi, Kanagawa, 211-8588 (JP)**
• **SOEDA, Takeshi**
  **Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **ARITHMETIC PROGRAM, ARITHMETIC METHOD, AND INFORMATION PROCESSING DEVICE**

(57) An arithmetic program of searching for a combination of a plurality of explanatory variables such that an objective variable satisfies a predetermined condition by evolving a plurality of individuals each identified by the plurality of explanatory variables, the arithmetic program causing a computer to execute processing including: setting a constraint on the combination of the plurality of explanatory variables and controlling an intermediate variable that varies the explanatory variables of each of the plurality of individuals independently of the constraint; and evaluating an objective function obtained using the explanatory variables varied by the intermediate variable.

FIG. 1

EP 4 293 580 A1

## Description

FIELD

The present case relates to an arithmetic program, an arithmetic method, and an information processing device.

BACKGROUND

Techniques for performing an evolutionary optimization process to optimize an objective function obtained by combining explanatory variables have been disclosed.

Japanese Laid-open Patent Publication No. 2021-005278, Japanese Laid-open Patent Publication No. 2020-030683, U.S. Patent Application Publication No. 2010-0131439, and U.S. Patent Application Publication No. 2007-0208691 are disclosed as related art.

SUMMARY

TECHNICAL PROBLEM

When discrete constraints are set in an evolutionary optimization process, movement of each individual is likely to be limited and an obtained solution tends to fall into a local solution in an objective function space. In this case, the process is repeated from creation of initial individuals, which lengthens a time to be taken to obtain a solution that satisfies a predetermined condition.

In one aspect, an object of the present case is to provide an arithmetic program, an arithmetic method, and an information processing device capable of shortening a time to be taken to obtain a solution that satisfies a predetermined condition.

SOLUTION TO PROBLEM

According to an aspect of the embodiments, there is provided an arithmetic program of searching for a combination of a plurality of explanatory variables such that an objective variable satisfies a predetermined condition by evolving a plurality of individuals each identified by the plurality of explanatory variables, the arithmetic program causing a computer to execute processing including: setting a constraint on the combination of the plurality of explanatory variables and controlling an intermediate variable that varies the explanatory variables of each of the plurality of individuals independently of the constraint; and evaluating an objective function obtained using the explanatory variables varied by the intermediate variable.

ADVANTAGEOUS EFFECTS OF INVENTION

It becomes possible to shorten a time to be taken to obtain a solution that satisfies a predetermined condition.

BRIEF DESCRIPTION OF DRAWINGS

FIG. 1 is a flowchart of a case of evolving individuals by a multi-objective genetic algorithm using discrete constraints;
FIG. 2A is a block diagram exemplifying an overall configuration of an information processing device, and FIG. 2B is a block diagram exemplifying a hardware configuration of the information processing device;
FIG. 3 is a flowchart illustrating exemplary operation of the information processing device;
FIG. 4 is a diagram exemplifying a case where a gene xi is directly treated as a ratio and individual evaluation is conducted using characteristic value models;
FIG. 5 is a diagram exemplifying a case of introducing a constraint condition by controlling a gene Si as an intermediate variable;
FIG. 6 is a diagram for explaining a hypervolume;
FIG. 7 illustrates virtual data for machine learning;
FIGs. 8A to 8E are diagrams exemplifying machine learning;
FIGs. 9A and 9B are diagrams exemplifying obtained Pareto solutions;
FIG. 10 is a diagram illustrating a result of "×" (first time of third condition) in FIG. 9A in detail;
FIG. 11 is a diagram illustrating a result of "+" (second time of third condition) in FIG. 9A in detail;

FIG. 12 is a diagram illustrating a result of "▲" (second condition) in FIG. 9A in detail;
FIG. 13 is a diagram illustrating a result of "●" (first condition) in FIG. 9A in detail; and
FIG. 14 is a diagram illustrating a change in the hypervolume in detail for the result of "●" (first condition) in FIG. 9A.

## DESCRIPTION OF EMBODIMENTS

Before describing an embodiment, an outline of evolutionary optimization will be described.

The evolutionary optimization is a method of searching for a combination of explanatory variables by applying the principle of biological evolution such that an objective function satisfies a predetermined condition. The evolutionary optimization includes a multi-objective genetic algorithm (multi-objective GA) and the like. The evolutionary optimization may introduce a constraint condition and use a penalty method at a time of evaluating an obtained individual objective function.

As an example, a constraint using the penalty method will be described by focusing on a case of optimizing a plurality of objective functions (strength, insulation, acid resistance, etc.) at a time of searching for the optimum combination of components from a very large amount of component candidates.

In order to optimize a ratio of each component, for example, the sum of individual components needs to be 100%. Therefore, it needs to set a constraint of setting the sum of individual components to 100%.

Next, it may be difficult to conduct an experiment when the number of components is too large. Therefore, it needs to set an upper limit on the number of components.

In such a case, an objective function F1 and an objective function F2 may be expressed as follows. The reference f1(x) represents a characteristic value obtained by a characteristic value model f1. The reference f2(x) represents a characteristic value obtained by a characteristic value model f2. The reference x represents a mixing ratio of individual components. It is assumed that the objective function F1 and the objective function F2 are more favorable as they are smaller. In this case, optimization of the objective function F1 and the objective function F2 indicates minimization of the objective function F1 and the objective function F2. The constraint term P100% and the constraint term PCLC are set to have positive values when the constraints are violated. The references $\alpha$ and $\beta$ represent weights of the constraint terms. F1 = f1 (x) + $\alpha$P100% + $\beta$PCLC $\to$ min F2 = f2(x) + $\alpha$P100% + $\beta$PCLC $\to$ min

The constraint term P100% and the constraint term PCLC may be expressed as follows.

[Equation 1]

$$P_{100\%} = \begin{cases} W_{a1}\left|\sum_i x_i - 100\right| + W_{c1}, & if \sum_i x_i < 100 - \delta, \\ W_{a1}\left|\sum_i x_i - 100\right| + W_{c1}, & if \sum_i x_i > 100 + \delta \\ 0, & else. \end{cases}$$

[Equation 2]

$$P_{CLC} = \begin{cases} W_{a2}\left|\sum_i w_i - N_{CLC}\right| + W_{c2}, & if \sum_i w_i > N_{CLC}, \\ 0, & else. \end{cases}$$

$$where\ w_i = \begin{cases} 0, & if\ x_i = 0, \\ 1, & else. \end{cases}$$

Wa1, Wc1, Wa2, and Wc2 represent weights of the constraints. The reference $\delta$ represents a permissible amount. NCLC represents an upper limit value of the number of components.

The constraint term P100% and the constraint term PCLC as described above do not allow latitude in the constraints. For example, totals of 100%, 95%, 90%, and the like set a constraint on one predetermined point. Upper limit numbers of 100 types, 95 types, 90 types, and the like also set a constraint on one predetermined point. As such, the constraints as described above would be 100, 95, 90, and the like, which are discrete. Such constraints will be referred to as discrete constraints. When discrete constraints are set in the evolutionary optimization, movement of individuals during the evolutionary optimization is limited, which may lead to a local solution.

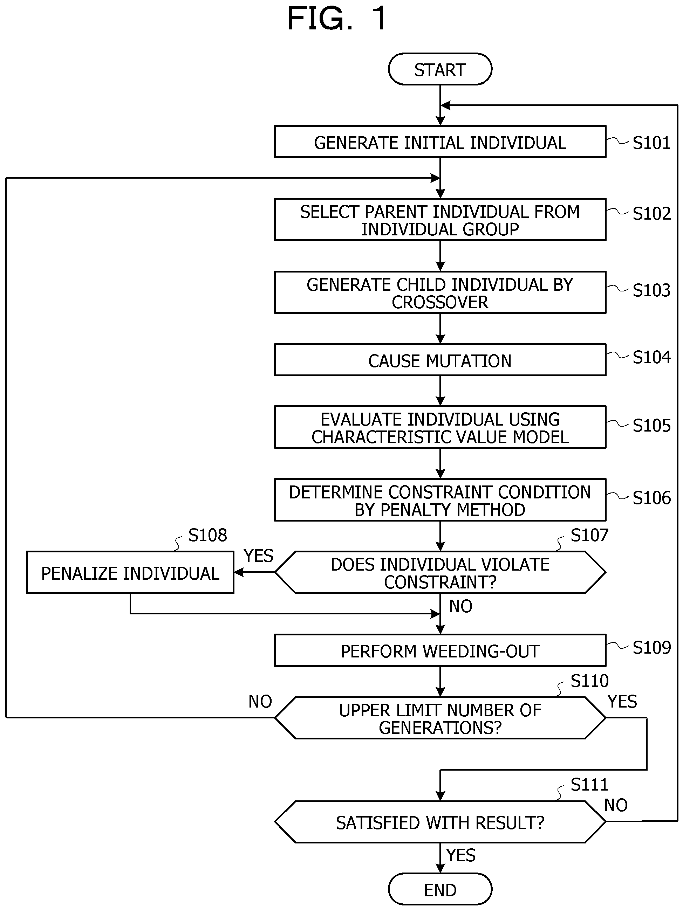

FIG. 1 is a flowchart of a case of evolving individuals by the multi-objective genetic algorithm using discrete constraints. As exemplified in FIG. 1, first, a plurality of initial individuals is generated to generate a group of individuals (step S101). Next, a parent individual is selected from the group of individuals (step S102). Next, child individuals are generated by a crossover (step S103). Next, the child individuals are mutated (step S104).

Next, the individuals mutated in step S104 are evaluated using the characteristic value models f1 and f2 (step S105). In this case, genes (individual components) are directly treated as ratios, and evaluated using the characteristic value models f1 and f2.

Next, a constraint condition is determined using the penalty method (step S106). Next, it is determined whether or not the individuals violate the constraint (step S107). In this case, discrete constraints are introduced by the penalty method. If it is determined as "Yes" in step S107, the individual violating the constraint is penalized to lower an evaluation function (function for evaluating each objective function) (step S108). If it is determined as "No" in step S107, the individuals are not penalized. Next, the individuals for which the evaluation function exceeding a threshold is not obtained are weeded out (step S109).

Next, it is determined whether or not the number of generations has reached the upper limit (step S110). If it is determined as "No" in step S110, the process is performed again from step S102. If it is determined as "Yes" in step S110, it is determined whether or not the obtained Pareto solution satisfies a predetermined condition (step S111). If it is determined as "No" in step S111, the process is performed again from step S101. If it is determined as "Yes" in step S111, the optimization is terminated.

Since it tends to fall into a local solution when discrete constraints are used, it is increasingly determined as "No" in step S111. Therefore, it needs to regenerate initial individuals and perform optimization many times, which lengthens a time to be taken to obtain an optimum solution.

In view of the above, in the following embodiment, an information processing device, an arithmetic method, and an arithmetic program capable of suppressing falling into a local solution and shortening a time to be taken to obtain an optimum solution will be described.

[First Embodiment]

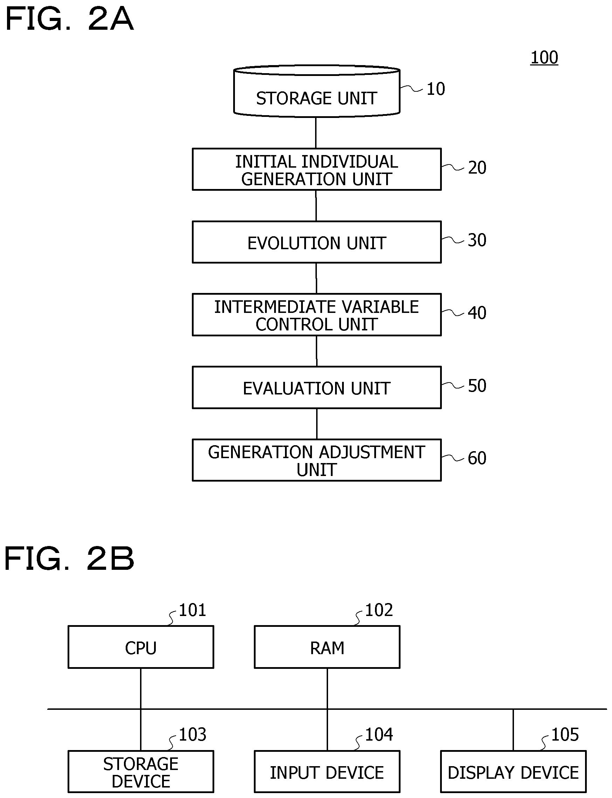

FIG. 2A is a block diagram exemplifying an overall configuration of an information processing device 100. As exemplified in FIG. 2A, the information processing device 100 includes a storage unit 10, an initial individual generation unit 20, an evolution unit 30, an intermediate variable control unit 40, an evaluation unit 50, a generation adjustment unit 60, and the like. In the present embodiment, an example of searching for an optimum combination of materials from mixture candidate materials will be described.

FIG. 2B is a block diagram exemplifying a hardware configuration of the information processing device 100. As exemplified in FIG. 2B, the information processing device 100 includes a CPU 101, a RAM 102, a storage device 103, an input device 104, a display device 105, and the like.

The central processing unit (CPU) 101 serves as a central processing unit. The CPU 101 includes one or more cores. The random access memory (RAM) 102 is a volatile memory that temporarily stores a program to be executed by the CPU 101, data to be processed by the CPU 101, and the like. The storage device 103 is a nonvolatile storage device. As the storage device 103, for example, a read only memory (ROM), a solid state drive (SSD) such as a flash memory, a hard disk to be driven by a hard disk drive, or the like may be used. The storage device 103 stores an arithmetic program. The input device 104 is an input device such as a keyboard, a mouse, or the like. The display device 105 is a display device such as a liquid crystal display (LCD). The storage unit 10, the initial individual generation unit 20, the evolution unit 30, the intermediate variable control unit 40, the evaluation unit 50, and the generation adjustment unit 60 are implemented by the CPU 101 executing the arithmetic program. Note that hardware such as a dedicated circuit may be used as the storage unit 10, the initial individual generation unit 20, the evolution unit 30, the intermediate variable control unit 40, the evaluation unit 50, and the generation adjustment unit 60.

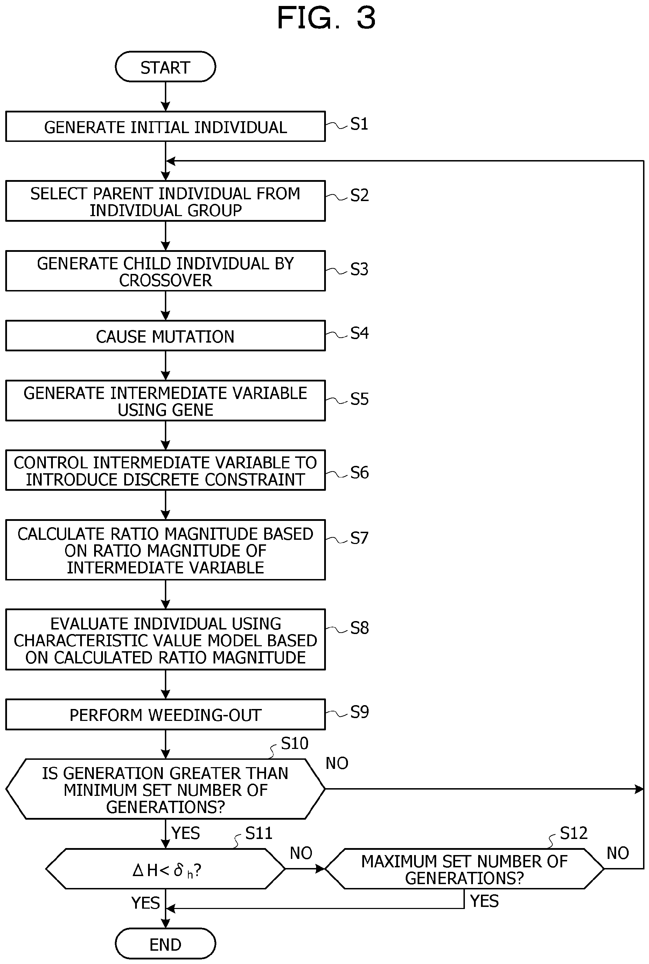

FIG. 3 is a flowchart illustrating exemplary operation of the information processing device 100. As exemplified in FIG. 3, the initial individual generation unit 20 generates a plurality of initial individuals to generate a group of individuals using data stored in the storage unit 10 (step S1). For example, the storage unit 10 stores information regarding each component of the mixture candidate. The initial individual generation unit 20 generates an initial combination from the individual components stored in the storage unit 10. The initial individuals may be designated by a user using the input device 104, or may be generated by the initial individual generation unit 20 randomly combining the individual components.

Next, the evolution unit 30 selects a parent individual from the group of individuals (step S2). Next, the evolution unit 30 generates child individuals by a crossover using the parent individual selected in step S2 (step S3). Next, the evolution unit 30 mutates the child individuals generated in step S3 (step S4).

Next, the intermediate variable control unit 40 generates an intermediate variable using genes (individual components) (step S5). First, an objective function F1 and an objective function F2 are set as follows. It is assumed that the objective function F1 and the objective function F2 are more favorable as they are smaller. In this case, optimization of the objective function F1 and the objective function F2 indicates minimization of the objective function F1 and the objective function F2. The references f1 and f2 are characteristic value models. F1 = f1(x) → min F2 = f2(x) → min

A gene Si may be searched between 0 and 100 without a constraint. It is assumed that each individual carries the gene Si. In this manner, the gene Si is not directly treated as a ratio, but is used as an intermediate variable. Therefore, by using the intermediate variable, it becomes possible to vary an explanatory variable of each individual independently of a constraint.

Next, the intermediate variable control unit 40 controls the intermediate variable to introduce discrete constraints (step S6). As the discrete constraints, the sum of the individual components is set to 100%, and an upper limit is set on the number of components. For example, the intermediate variable control unit 40 selects, from all genes Nall, ones with the largest values for the specified upper limit number NCLC. By controlling the intermediate variable in this manner, it becomes possible to introduce a constraint on the upper limit of the number of components. Furthermore, the intermediate variable control unit 40 creates a variable s' having a value only for the selected gene (other values are set to 0). The intermediate variable control unit 40 may control the intermediate variable as follows to introduce a constraint of the total 100% using the created variable s'.

[Equation 3]

$$ x_i = \frac{s_i'}{\sum_{i=1}^{N all} s_i'} * 100 $$

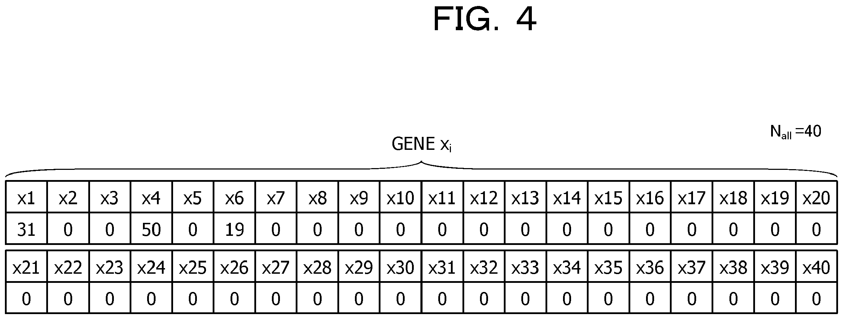

Here, FIG. 4 is a diagram exemplifying a case where a gene xi is directly treated as a ratio and individual evaluation is conducted using characteristic value models. As exemplified by the individual in FIG. 4, Nall = 40 is set and the number of candidate components (explanatory variables) is set to 40. Therefore, i represents each integer from 1 to 40. Each gene xi represents a candidate component. Numerical values in lower columns of the individual genes xi represent component ratios (%) of the individual genes. Since the upper limit number of components is set to 3 and the total is set to 100%, in the example of FIG. 4, the gene x1 is 31%, the gene x4 is 50%, the gene x6 is 19%, and the total is 100%. When the gene xi is directly treated as a ratio, the characteristic value models f1(x) and f2(x) are directly evaluated using individual gene information. In this manner, when the gene xi is directly treated as a ratio, movement of the gene xi is limited, and it tends to fall into a local solution.

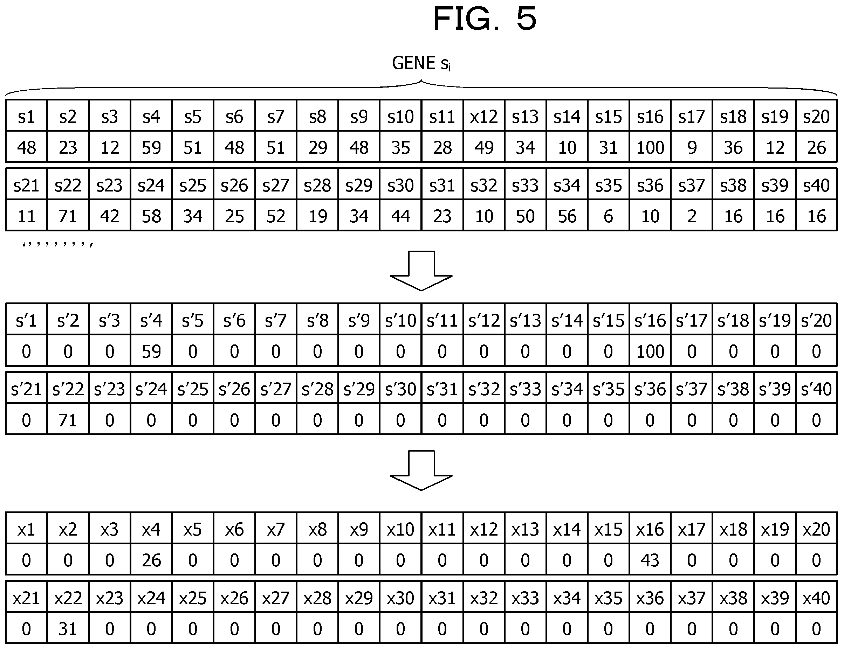

Meanwhile, FIG. 5 is a diagram exemplifying a case of introducing a constraint condition by controlling the gene Si as an intermediate variable. The upper part of FIG. 5 illustrates contents of an individual S. For the individual S, Nall = 40 is set and the number of candidate components (explanatory variables) is set to 40. Therefore, i represents each integer from 1 to 40. Each gene xi represents a candidate component. Numerical values in lower columns of the individual genes xi represent component ratios (%) of the individual genes. Furthermore, the upper limit number of components is set as NCLC = 3. At the stage of the upper part of FIG. 5, the total does not have to be 100%, and thus the total of individual genes is not 100%.

Next, as exemplified in the middle part of FIG. 5, three genes, which correspond to the specified upper limit number, with values larger than others are selected from all 40 genes. A variable s' having a value only for the selected gene (other values are set to 0) is created. In the example of the middle part of FIG. 5, three genes s'4, s'16, and s'22 are selected. The sum of the respective genes does not have to be 100. In the example of the middle part of FIG. 5, the total is 230.

Next, as exemplified in the lower part of FIG. 5, ratio magnitude x is calculated using the created variable s'. For example, it is sufficient if xi = (s'/230) × 100 is calculated. In the example of the lower part of FIG. 5, a ratio of the gene x4 is 26%, a ratio of the gene x16 is 43%, and a ratio of the gene x22 is 31%. In the example of FIG. 5, the characteristic value models f1(x) and f2(x) are evaluated using the calculated ratio magnitude xi, rather than treating the genes directly as ratios.

After execution of step S6, the intermediate variable control unit 40 calculates ratio magnitude using the ratio of the magnitude of the intermediate variable (step S7). Specifically, the intermediate variable control unit 40 calculates the ratio magnitude by calculating xi using the above equation.

Next, the intermediate variable control unit 40 evaluates individuals using the characteristic value model based on the ratio magnitude calculated in step S7 (step S8). Next, individuals with poor evaluated values are weeded out (step S9).

Next, the generation adjustment unit 60 determines whether or not the current generation is greater than the minimum set number of generations (step S10). If it is determined as "No" in step S10, the process is performed again from step S2.

If it is determined as "Yes" in step S10, the generation adjustment unit 60 determines whether or not $\delta H$ is larger than $\Delta H$ (step S11). Here, $\Delta H$ represents a change amount in a hypervolume. Specifically, it may be expressed as $\Delta H = H(g) - H(g - Th)$. $H(g)$ represents a hypervolume in a current generation $g$. Th represents a step size. A step size represents a predetermined number of generations. $\delta H$ represents a threshold.

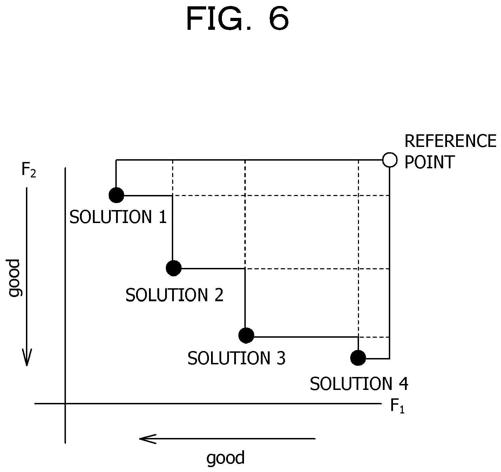

FIG. 6 is a diagram for explaining the hypervolume. The hypervolume is a performance index for a Pareto solution. Specifically, the hypervolume represents the area or volume of a region formed by a certain reference point and a set of solutions obtained by an algorithm in an objective function space. As an example, it is possible to use a standardized value of each objective function with a reference point of (0, 0). When two objective functions are used, the area illustrated in FIG. 6 is the hypervolume. As the hypervolume is larger, the solution is wider so that it may be determined that a favorable result is obtained.

If it is determined as "No" in step S11, the generation adjustment unit 60 determines whether or not the current generation has reached the maximum set number of generations (step S12). If it is determined as "No" in step S12, the process is performed again from step S2. If it is determined as "Yes" in step S11, or if it is determined as "Yes" in step S12, the execution of the flowchart is terminated.

Next, results of simulation performed according to the method of the embodiment described above will be described. In the simulation, composition $x_i$ ($i = 1, 2, ..., n$ and $\Sigma_i x_i = 1$) of components 1 to n is changed to simulate a multi-objective optimization problem for minimizing the characteristic $f_1(x)$ and the characteristic $f_2(x)$. This multi-objective optimization problem may be expressed as follows. $F_1(x) = f_1(x) \rightarrow min$ $F_2(x) = f_2(x) \rightarrow min$

[Equation 4]

$$\sum_i x_i = 1$$

The following functions will be considered as simple examples. Here, $\alpha_i (\geqq 0)$, $\beta_i (\geqq 0)$, $p_i$, and $q_i (i = 1, 2, ..., n)$ are randomly generated. Each of the functions is convex downward.

[Equation 5]

$$f_1(x) = \left\{ \sum_{i=1}^{n} \alpha_i (x_i - p_i)^2 \right\}^2$$

[Equation 6]

$$f_2(x) = \left\{ \sum_{i=1}^{n} \beta_i (x_i - q_i)^2 \right\}^2$$

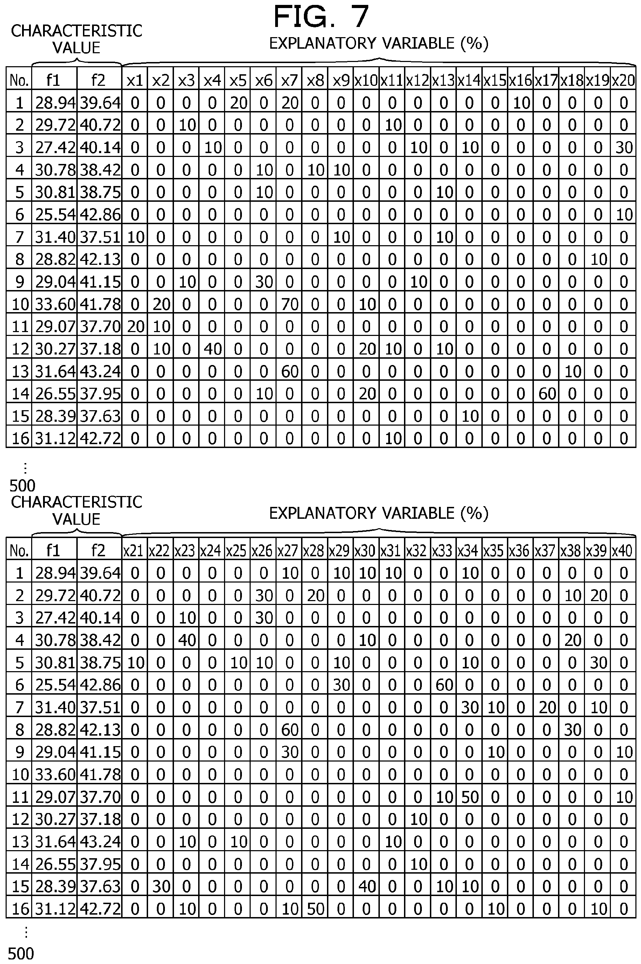

FIG. 7 illustrates virtual data for machine learning. There are 40 candidate components (explanatory variables). The number of data is set to 500. One piece of data includes three to eight components. A step size is set to 10%. The references f1 and f2 represent characteristic values.

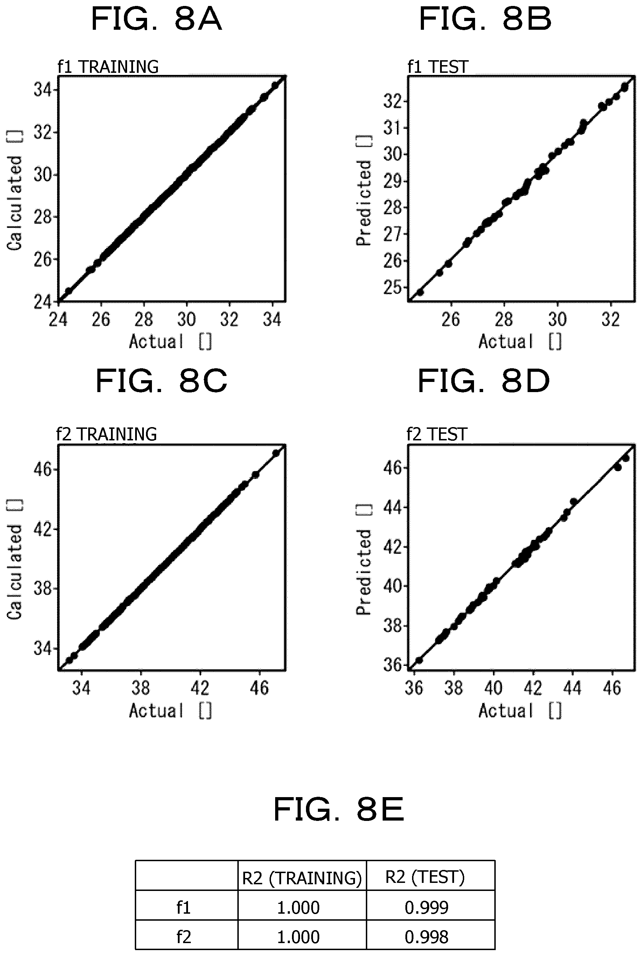

Training of machine learning was carried out using the virtual data of FIG. 7 as training data. FIG. 8A illustrates the result of modeling the characteristic f1 by Gaussian process (GP) regression. FIG. 8B illustrates the result of evaluating test data using the obtained model. As the test data, 10% (50 pieces) of the virtual data were randomly selected and used. FIG. 8C illustrates the result of modeling the characteristic f2 by Gaussian process (GP) regression. FIG. 8D illustrates the result of evaluating test data using the obtained model. As the test data, 10% (50 pieces) of the virtual data were randomly selected and used. FIG. 8E illustrates R-squared values. As illustrated in FIG. 8E, the R-squared values were close to 1.

Next, the intermediate variable described in step S5 in FIG. 3 was used in the genetic algorithm to optimize the characteristic f1 and the characteristic f2. The initial number of individuals was set to 160. The number of generations was set to 250. As discrete constraints, 100% was set as a constraint on the total, and the upper limit number 3 was set as a constraint on the number of components. The minimum set number of generations in a case of automatically adjusting the number of generations was set to 250, and the maximum set number of generations was set to 2,000. The threshold $\delta H$ of the change amount in the hypervolume was set to 0.01. The step size TH in a case of calculating the change amount in the hypervolume was set to 50.

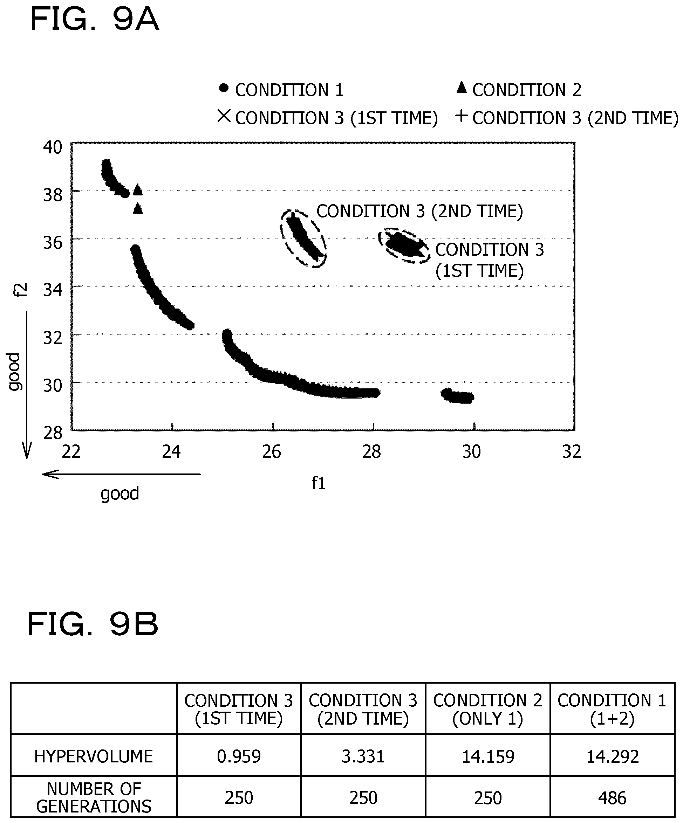

FIGs. 9A and 9B are diagrams exemplifying obtained Pareto solutions. In FIG. 9A, "●" represents a result when both intermediate variable control and automatic adjustment of the number of generations are carried out (first condition). "A" represents a result when only the intermediate variable control is carried out without carrying out the automatic adjustment of the number of generations (second condition). Furthermore, "×" represents a result (first time) when a gene is directly used as a ratio without using the intermediate variable (third condition). "+" represents a result (second time) when a gene is directly used as a ratio without using the intermediate variable (third condition).

Since the results of the first and second conditions are positioned on the left side and lower side than the results of the third condition, both of the characteristics f1 and f2 are favorable. Furthermore, the results of the first and second conditions are more spread than the results of the third condition, whereby the hypervolume is larger. Therefore, the results of the first and second conditions are more favorable than the results of the third condition. The results of the third condition are considered to fall into a local solution.

Note that, when the intermediate variable is used, the Pareto solutions spread further in the case where the number of generations is automatically adjusted (first condition) than in the case where the number of generations is not automatically adjusted (second condition). Therefore, it may be seen that a more favorable solution is obtained when the number of generations is automatically adjusted.

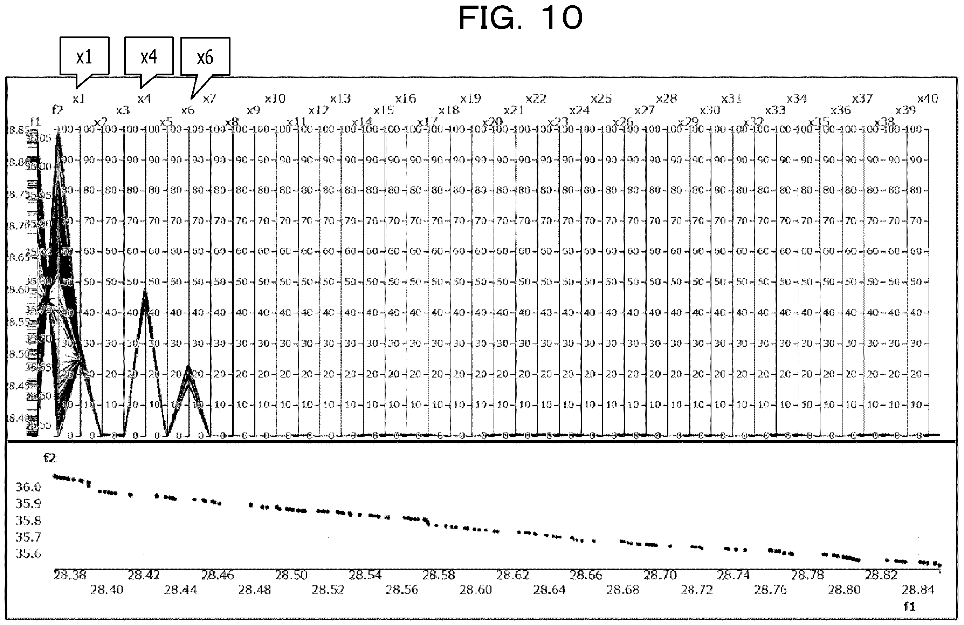

FIG. 10 is a diagram illustrating the result of "×" (first time of third condition) in FIG. 9A in detail. As illustrated in FIG. 10, it may be seen that the movement of the individual is limited by a penalty term, and the components of any solution are fixed at x1, x4, and x6. That is, it may be seen that they fall into local solutions.

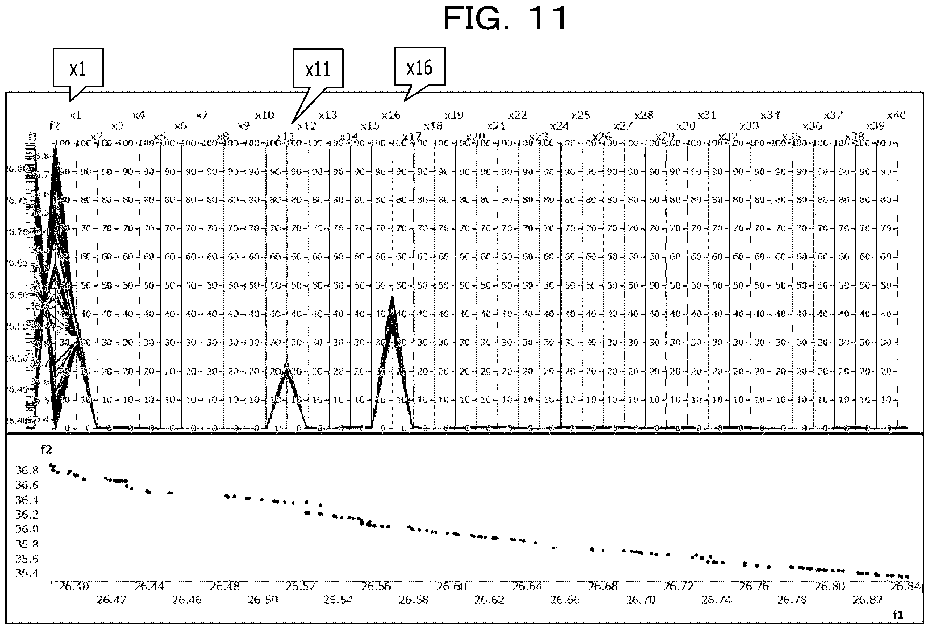

FIG. 11 is a diagram illustrating the result of "+" (second time of third condition) in FIG. 9A in detail. As illustrated in FIG. 11, it may be seen that the movement of the individual is limited by the penalty term, and the components of any solution are fixed at x1, x11, and x16. That is, it may be seen that they fall into local solutions.

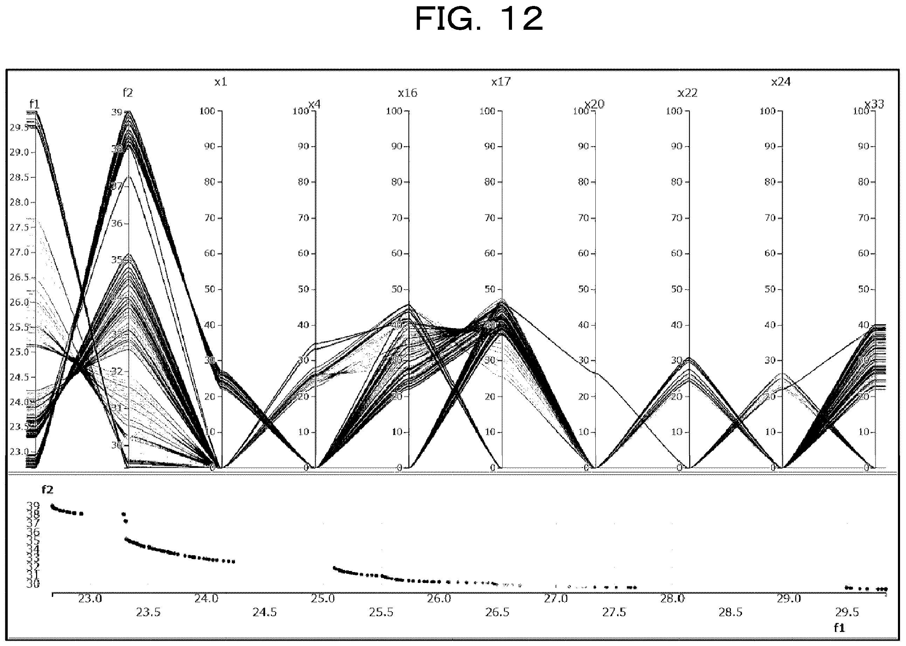

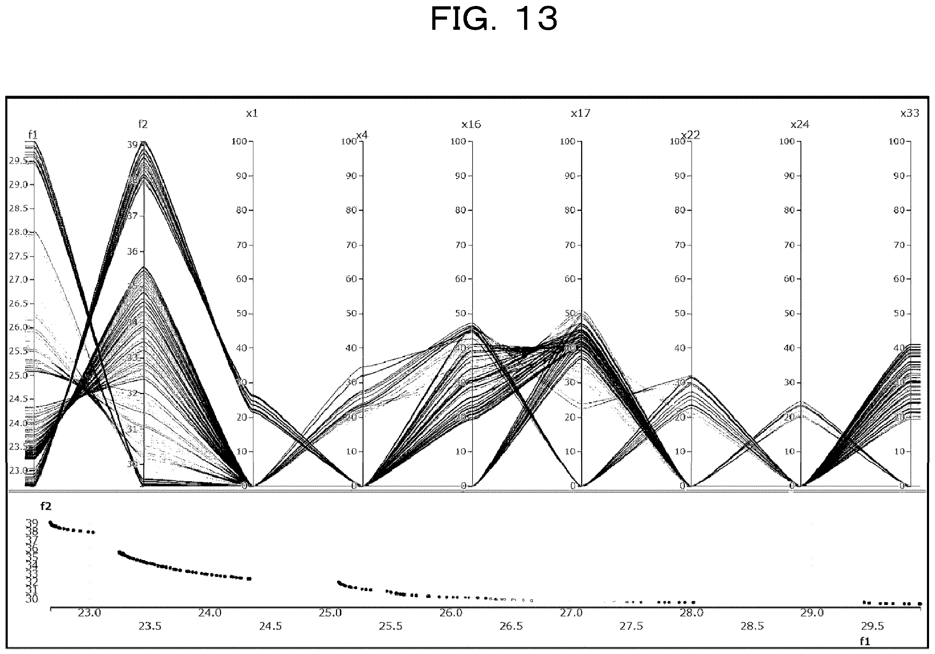

FIG. 12 is a diagram illustrating the result of "A" (second condition) in FIG. 9A in detail. Since no penalty term is used, it may be seen that the movement of the individual is less likely to be limited as illustrated in FIG. 12. FIG. 13 is a diagram illustrating the result of "●" (first condition) in FIG. 9A in detail. Since no penalty term is used, it may be seen that the movement of the individual is less likely to be limited as illustrated in FIG. 13.

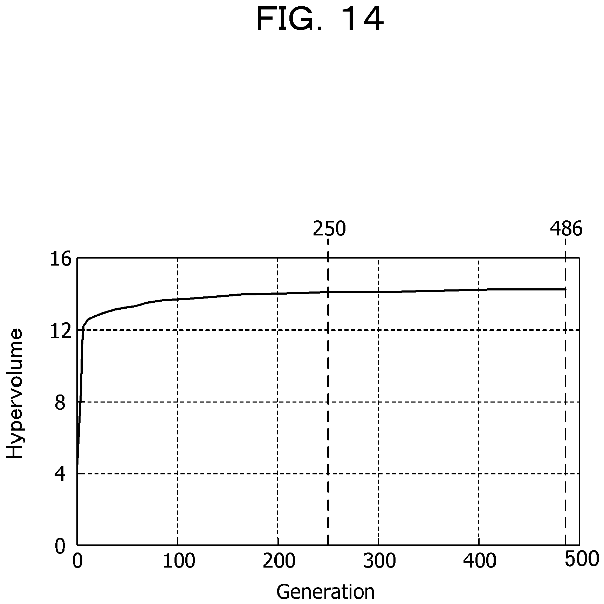

FIG. 14 is a diagram illustrating a change in the hypervolume in detail for the result of "●" (first condition) in FIG. 9A. As exemplified in FIG. 14, it may be seen that, by automatically adjusting the number of generations, the optimization is sufficiently carried out to the point where the change in the hypervolume becomes saturated.

According to the present embodiment, constraints are set on the combination of explanatory variables, and the intermediate variable for varying the explanatory variable of each individual is controlled independently of the constraints. An objective function obtained using the explanatory variable varied by the intermediate variable is evaluated. By suing such an intermediate variable, it becomes possible to suppress limitation on individual movement even when discrete constraints are set. Accordingly, it becomes possible to suppress falling into a local solution. As a result, it becomes possible to search for a solution in a short time such that the objective function satisfies a predetermined condition.

A combination of the explanatory variables may be selected according to the values of the explanatory variables varied by the intermediate variable. In this case, the limitation on the individual movement may be suppressed, which makes it possible to suppress falling into a local solution.

An upper limit number may be set on the number of explanatory variables as a constraint, and of the explanatory variables varied by the intermediate variable, ones with the largest values for the upper limit number may be selected as a combination. In this case, it becomes possible to satisfy the discrete constraints, such as the upper limit of the number of explanatory variables and the like, while suppressing the limitation on the individual movement.

The total value of the explanatory variables may be set to a predetermined value as a constraint, and the values of the explanatory variables varied by the intermediate variable may be converted according to ratios such that the total value becomes the predetermined value. In this case, it becomes possible to satisfy the discrete constraints, such as the total value of the explanatory variables and the like, while suppressing the limitation on the individual movement.

An upper limit may be set on the maximum number of generations of evolution according to a difference in the hypervolume between two consecutive generations in the objective function space. In this case, while the intermediate variable is set to suppress the individual movement and a search range expands, it becomes possible to automatically adjust the number of generations according to a problem.

A minimum number of generations of evolution may be set to make the maximum number of generations larger than the minimum number of generations. By setting the minimum number of generations, it becomes possible to sufficiently perform the optimization process.

In each of the examples described above, the intermediate variable control unit 40 is an exemplary intermediate variable control unit that sets a constraint on a combination of a plurality of explanatory variables and controls an intermediate variable for varying the individual explanatory variables of a plurality of individuals independently of the constraint. The evaluation unit 50 is an exemplary evaluation unit that evaluates an objective function obtained using the explanatory variables varied by the intermediate variable control unit using the intermediate variable.

Although the embodiment has been described above in detail, the present embodiment is not limited to such specific embodiment, and various modifications and alterations may be made within the scope of the present embodiment described in the claims.

## Claims

1. An arithmetic program comprising instructions which, when executed by a computer of searching for a combination of a plurality of explanatory variables such that an objective variable satisfies a predetermined condition by evolving a plurality of individuals each identified by the plurality of explanatory variables, cause the computer to perform processing comprising:

   setting a constraint on the combination of the plurality of explanatory variables and controlling an intermediate variable that varies the explanatory variables of each of the plurality of individuals independently of the constraint; and
   evaluating an objective function obtained using the explanatory variables varied by the intermediate variable.

2. The arithmetic program according to claim 1, the recording medium storing the arithmetic program for causing the computer to execute the process further comprising:
   selecting the combination of the plurality of explanatory variables according to values of the explanatory variables varied by the intermediate variable.

3. The arithmetic program according to claim 1 or 2, the recording medium storing the arithmetic program for causing the computer to execute the process further comprising:
   setting an upper limit number on a number of the plurality of explanatory variables as the constraint and selecting, as the combination, explanatory variables with a largest value for the upper limit number from among the explanatory variables varied by the intermediate variable.

4. The arithmetic program according to claim 1 or 2, the recording medium storing the arithmetic program for causing the computer to execute the process further comprising:
setting a total value of the plurality of explanatory variables to a predetermined value as the constraint and converting the values of the explanatory variables varied by the intermediate variable according to a ratio such that the total value becomes the predetermined value.

5. The arithmetic program according to claim 1 or 2, the recording medium storing the arithmetic program for causing the computer to execute the process further comprising:

 setting an upper limit on a maximum number of generations of the evolution according to a hypervolume in a space of the objective function, wherein
 the hypervolume includes volume or area obtained from a reference point and a set of solutions for each generation in the space of the objective function.

6. The arithmetic program according to claim 5, the recording medium storing the arithmetic program for causing the computer to execute the process further comprising:
setting a minimum number of generations of the evolution and making the maximum number of generations larger than the minimum number of generations.

7. An arithmetic method implemented by a computer of searching for a combination of a plurality of explanatory variables such that an objective variable satisfies a predetermined condition by evolving a plurality of individuals each identified by the plurality of explanatory variables, the arithmetic method comprising:

 setting a constraint on the combination of the plurality of explanatory variables and controlling an intermediate variable that varies the explanatory variables of each of the plurality of individuals independently of the constraint; and
 evaluating an objective function obtained using the explanatory variables varied by the intermediate variable.

8. A non-transitory computer-readable recording medium storing an arithmetic program of searching for a combination of a plurality of explanatory variables such that an objective variable satisfies a predetermined condition by evolving a plurality of individuals each identified by the plurality of explanatory variables, the arithmetic program causing a computer to execute a process comprising:

 setting a constraint on the combination of the plurality of explanatory variables and controlling an intermediate variable that varies the explanatory variables of each of the plurality of individuals independently of the constraint; and
 evaluating an objective function obtained using the explanatory variables varied by the intermediate variable.

# FIG. 1

```
          ┌─────────┐
          │  START  │
          └─────────┘
               │
               ▼
   ┌──────────────────────────┐
   │ GENERATE INITIAL INDIVIDUAL │──── S101
   └──────────────────────────┘
               │
               ▼
   ┌──────────────────────────┐
   │ SELECT PARENT INDIVIDUAL FROM │──── S102
   │     INDIVIDUAL GROUP      │
   └──────────────────────────┘
               │
               ▼
   ┌──────────────────────────┐
   │ GENERATE CHILD INDIVIDUAL BY │──── S103
   │        CROSSOVER         │
   └──────────────────────────┘
               │
               ▼
   ┌──────────────────────────┐
   │      CAUSE MUTATION      │──── S104
   └──────────────────────────┘
               │
               ▼
   ┌──────────────────────────┐
   │  EVALUATE INDIVIDUAL USING  │──── S105
   │ CHARACTERISTIC VALUE MODEL │
   └──────────────────────────┘
               │
               ▼
   ┌──────────────────────────┐
   │ DETERMINE CONSTRAINT CONDITION │──── S106
   │    BY PENALTY METHOD     │
   └──────────────────────────┘
               │
               ▼
 S108                          S107
┌──────────────────┐  YES  ╱ DOES INDIVIDUAL VIOLATE ╲
│ PENALIZE INDIVIDUAL │◄─────╲      CONSTRAINT?       ╱
└──────────────────┘         ╲────────────────────╱
                                      │ NO
                                      ▼
                         ┌──────────────────────────┐
                         │   PERFORM WEEDING-OUT    │──── S109
                         └──────────────────────────┘
                                      │
                                      ▼
                        S110
         NO  ╱ UPPER LIMIT NUMBER OF ╲  YES
      ◄──────╲     GENERATIONS?      ╱──────┐
              ╲────────────────────╱        │
                                            ▼
                                          S111
                         ╱ SATISFIED WITH RESULT? ╲  NO
                         ╲───────────────────────╱────┐
                                   │ YES
                                   ▼
                              ┌─────────┐
                              │   END   │
                              └─────────┘
```

# FIG. 2A

100

STORAGE UNIT — 10

INITIAL INDIVIDUAL GENERATION UNIT — 20

EVOLUTION UNIT — 30

INTERMEDIATE VARIABLE CONTROL UNIT — 40

EVALUATION UNIT — 50

GENERATION ADJUSTMENT UNIT — 60

# FIG. 2B

CPU — 101

RAM — 102

STORAGE DEVICE — 103

INPUT DEVICE — 104

DISPLAY DEVICE — 105

# FIG. 3

START

GENERATE INITIAL INDIVIDUAL — S1

SELECT PARENT INDIVIDUAL FROM INDIVIDUAL GROUP — S2

GENERATE CHILD INDIVIDUAL BY CROSSOVER — S3

CAUSE MUTATION — S4

GENERATE INTERMEDIATE VARIABLE USING GENE — S5

CONTROL INTERMEDIATE VARIABLE TO INTRODUCE DISCRETE CONSTRAINT — S6

CALCULATE RATIO MAGNITUDE BASED ON RATIO MAGNITUDE OF INTERMEDIATE VARIABLE — S7

EVALUATE INDIVIDUAL USING CHARACTERISTIC VALUE MODEL BASED ON CALCULATED RATIO MAGNITUDE — S8

PERFORM WEEDING-OUT — S9

S10 IS GENERATION GREATER THAN MINIMUM SET NUMBER OF GENERATIONS? — NO

YES

S11 $\Delta H < \delta_h$? — NO

S12 MAXIMUM SET NUMBER OF GENERATIONS? — NO

YES

YES

END

# FIG. 4

$N_{all} = 40$

GENE $x_i$

| x1 | x2 | x3 | x4 | x5 | x6 | x7 | x8 | x9 | x10 | x11 | x12 | x13 | x14 | x15 | x16 | x17 | x18 | x19 | x20 |
|----|----|----|----|----|----|----|----|----|-----|-----|-----|-----|-----|-----|-----|-----|-----|-----|-----|
| 31 | 0  | 0  | 50 | 0  | 19 | 0  | 0  | 0  | 0   | 0   | 0   | 0   | 0   | 0   | 0   | 0   | 0   | 0   | 0   |

| x21 | x22 | x23 | x24 | x25 | x26 | x27 | x28 | x29 | x30 | x31 | x32 | x33 | x34 | x35 | x36 | x37 | x38 | x39 | x40 |
|-----|-----|-----|-----|-----|-----|-----|-----|-----|-----|-----|-----|-----|-----|-----|-----|-----|-----|-----|-----|
| 0   | 0   | 0   | 0   | 0   | 0   | 0   | 0   | 0   | 0   | 0   | 0   | 0   | 0   | 0   | 0   | 0   | 0   | 0   | 0   |

# FIG. 5

GENE $s_i$

| s1 | s2 | s3 | s4 | s5 | s6 | s7 | s8 | s9 | s10 | s11 | x12 | s13 | s14 | s15 | s16 | s17 | s18 | s19 | s20 |
|----|----|----|----|----|----|----|----|----|-----|-----|-----|-----|-----|-----|-----|-----|-----|-----|-----|
| 48 | 23 | 12 | 59 | 51 | 48 | 51 | 29 | 48 | 35  | 28  | 49  | 34  | 10  | 31  | 100 | 9   | 36  | 12  | 26  |

| s21 | s22 | s23 | s24 | s25 | s26 | s27 | s28 | s29 | s30 | s31 | s32 | s33 | s34 | s35 | s36 | s37 | s38 | s39 | s40 |
|-----|-----|-----|-----|-----|-----|-----|-----|-----|-----|-----|-----|-----|-----|-----|-----|-----|-----|-----|-----|
| 11  | 71  | 42  | 58  | 34  | 25  | 52  | 19  | 34  | 44  | 23  | 10  | 50  | 56  | 6   | 10  | 2   | 16  | 16  | 16  |

( , , , , , , , )

⇒

| s'1 | s'2 | s'3 | s'4 | s'5 | s'6 | s'7 | s'8 | s'9 | s'10 | s'11 | s'12 | s'13 | s'14 | s'15 | s'16 | s'17 | s'18 | s'19 | s'20 |
|-----|-----|-----|-----|-----|-----|-----|-----|-----|------|------|------|------|------|------|------|------|------|------|------|
| 0   | 0   | 0   | 59  | 0   | 0   | 0   | 0   | 0   | 0    | 0    | 0    | 0    | 0    | 0    | 100  | 0    | 0    | 0    | 0    |

| s'21 | s'22 | s'23 | s'24 | s'25 | s'26 | s'27 | s'28 | s'29 | s'30 | s'31 | s'32 | s'33 | s'34 | s'35 | s'36 | s'37 | s'38 | s'39 | s'40 |
|------|------|------|------|------|------|------|------|------|------|------|------|------|------|------|------|------|------|------|------|
| 0    | 71   | 0    | 0    | 0    | 0    | 0    | 0    | 0    | 0    | 0    | 0    | 0    | 0    | 0    | 0    | 0    | 0    | 0    | 0    |

⇒

| x1 | x2 | x3 | x4 | x5 | x6 | x7 | x8 | x9 | x10 | x11 | x12 | x13 | x14 | x15 | x16 | x17 | x18 | x19 | x20 |
|----|----|----|----|----|----|----|----|----|-----|-----|-----|-----|-----|-----|-----|-----|-----|-----|-----|
| 0  | 0  | 0  | 26 | 0  | 0  | 0  | 0  | 0  | 0   | 0   | 0   | 0   | 0   | 0   | 43  | 0   | 0   | 0   | 0   |

| x21 | x22 | x23 | x24 | x25 | x26 | x27 | x28 | x29 | x30 | x31 | x32 | x33 | x34 | x35 | x36 | x37 | x38 | x39 | x40 |
|-----|-----|-----|-----|-----|-----|-----|-----|-----|-----|-----|-----|-----|-----|-----|-----|-----|-----|-----|-----|
| 0   | 31  | 0   | 0   | 0   | 0   | 0   | 0   | 0   | 0   | 0   | 0   | 0   | 0   | 0   | 0   | 0   | 0   | 0   | 0   |

# FIG. 6

# FIG. 7

CHARACTERISTIC VALUE | EXPLANATORY VARIABLE (%)

| No. | f1 | f2 | x1 | x2 | x3 | x4 | x5 | x6 | x7 | x8 | x9 | x10 | x11 | x12 | x13 | x14 | x15 | x16 | x17 | x18 | x19 | x20 |
|---|---|---|---|---|---|---|---|---|---|---|---|---|---|---|---|---|---|---|---|---|---|---|
| 1 | 28.94 | 39.64 | 0 | 0 | 0 | 0 | 20 | 0 | 20 | 0 | 0 | 0 | 0 | 0 | 0 | 0 | 0 | 10 | 0 | 0 | 0 | 0 |
| 2 | 29.72 | 40.72 | 0 | 0 | 10 | 0 | 0 | 0 | 0 | 0 | 0 | 0 | 10 | 0 | 0 | 0 | 0 | 0 | 0 | 0 | 0 | 0 |
| 3 | 27.42 | 40.14 | 0 | 0 | 0 | 10 | 0 | 0 | 0 | 0 | 0 | 0 | 0 | 10 | 0 | 10 | 0 | 0 | 0 | 0 | 0 | 30 |
| 4 | 30.78 | 38.42 | 0 | 0 | 0 | 0 | 0 | 10 | 0 | 10 | 10 | 0 | 0 | 0 | 0 | 0 | 0 | 0 | 0 | 0 | 0 | 0 |
| 5 | 30.81 | 38.75 | 0 | 0 | 0 | 0 | 0 | 10 | 0 | 0 | 0 | 0 | 0 | 0 | 10 | 0 | 0 | 0 | 0 | 0 | 0 | 0 |
| 6 | 25.54 | 42.86 | 0 | 0 | 0 | 0 | 0 | 0 | 0 | 0 | 0 | 0 | 0 | 0 | 0 | 0 | 0 | 0 | 0 | 0 | 0 | 10 |
| 7 | 31.40 | 37.51 | 10 | 0 | 0 | 0 | 0 | 0 | 0 | 0 | 0 | 10 | 0 | 0 | 0 | 10 | 0 | 0 | 0 | 0 | 0 | 0 |
| 8 | 28.82 | 42.13 | 0 | 0 | 0 | 0 | 0 | 0 | 0 | 0 | 0 | 0 | 0 | 0 | 0 | 0 | 0 | 0 | 0 | 0 | 10 | 0 |
| 9 | 29.04 | 41.15 | 0 | 0 | 10 | 0 | 0 | 30 | 0 | 0 | 0 | 0 | 0 | 10 | 0 | 0 | 0 | 0 | 0 | 0 | 0 | 0 |
| 10 | 33.60 | 41.78 | 0 | 20 | 0 | 0 | 0 | 0 | 70 | 0 | 0 | 10 | 0 | 0 | 0 | 0 | 0 | 0 | 0 | 0 | 0 | 0 |
| 11 | 29.07 | 37.70 | 20 | 10 | 0 | 0 | 0 | 0 | 0 | 0 | 0 | 0 | 0 | 0 | 0 | 0 | 0 | 0 | 0 | 0 | 0 | 0 |
| 12 | 30.27 | 37.18 | 0 | 10 | 0 | 40 | 0 | 0 | 0 | 0 | 0 | 20 | 10 | 0 | 10 | 0 | 0 | 0 | 0 | 0 | 0 | 0 |
| 13 | 31.64 | 43.24 | 0 | 0 | 0 | 0 | 0 | 0 | 60 | 0 | 0 | 0 | 0 | 0 | 0 | 0 | 0 | 0 | 0 | 10 | 0 | 0 |
| 14 | 26.55 | 37.95 | 0 | 0 | 0 | 0 | 0 | 10 | 0 | 0 | 0 | 20 | 0 | 0 | 0 | 0 | 0 | 0 | 60 | 0 | 0 | 0 |
| 15 | 28.39 | 37.63 | 0 | 0 | 0 | 0 | 0 | 0 | 0 | 0 | 0 | 0 | 0 | 0 | 0 | 10 | 0 | 0 | 0 | 0 | 0 | 0 |
| 16 | 31.12 | 42.72 | 0 | 0 | 0 | 0 | 0 | 0 | 0 | 0 | 0 | 0 | 10 | 0 | 0 | 0 | 0 | 0 | 0 | 0 | 0 | 0 |

⋮

500

CHARACTERISTIC VALUE | EXPLANATORY VARIABLE (%)

| No. | f1 | f2 | x21 | x22 | x23 | x24 | x25 | x26 | x27 | x28 | x29 | x30 | x31 | x32 | x33 | x34 | x35 | x36 | x37 | x38 | x39 | x40 |
|---|---|---|---|---|---|---|---|---|---|---|---|---|---|---|---|---|---|---|---|---|---|---|
| 1 | 28.94 | 39.64 | 0 | 0 | 0 | 0 | 0 | 0 | 10 | 0 | 10 | 10 | 10 | 0 | 0 | 10 | 0 | 0 | 0 | 0 | 0 | 0 |
| 2 | 29.72 | 40.72 | 0 | 0 | 0 | 0 | 0 | 30 | 0 | 20 | 0 | 0 | 0 | 0 | 0 | 0 | 0 | 0 | 0 | 10 | 20 | 0 |
| 3 | 27.42 | 40.14 | 0 | 0 | 10 | 0 | 0 | 30 | 0 | 0 | 0 | 0 | 0 | 0 | 0 | 0 | 0 | 0 | 0 | 0 | 0 | 0 |
| 4 | 30.78 | 38.42 | 0 | 0 | 40 | 0 | 0 | 0 | 0 | 0 | 0 | 10 | 0 | 0 | 0 | 0 | 0 | 0 | 0 | 20 | 0 | 0 |
| 5 | 30.81 | 38.75 | 10 | 0 | 0 | 0 | 10 | 10 | 0 | 0 | 10 | 0 | 0 | 0 | 0 | 10 | 0 | 0 | 0 | 0 | 30 | 0 |
| 6 | 25.54 | 42.86 | 0 | 0 | 0 | 0 | 0 | 0 | 0 | 0 | 30 | 0 | 0 | 0 | 60 | 0 | 0 | 0 | 0 | 0 | 0 | 0 |
| 7 | 31.40 | 37.51 | 0 | 0 | 0 | 0 | 0 | 0 | 0 | 0 | 0 | 0 | 0 | 0 | 0 | 30 | 10 | 0 | 20 | 0 | 10 | 0 |
| 8 | 28.82 | 42.13 | 0 | 0 | 0 | 0 | 0 | 0 | 60 | 0 | 0 | 0 | 0 | 0 | 0 | 0 | 0 | 0 | 0 | 30 | 0 | 0 |
| 9 | 29.04 | 41.15 | 0 | 0 | 0 | 0 | 0 | 0 | 30 | 0 | 0 | 0 | 0 | 0 | 0 | 0 | 10 | 0 | 0 | 0 | 0 | 10 |
| 10 | 33.60 | 41.78 | 0 | 0 | 0 | 0 | 0 | 0 | 0 | 0 | 0 | 0 | 0 | 0 | 0 | 0 | 0 | 0 | 0 | 0 | 0 | 0 |
| 11 | 29.07 | 37.70 | 0 | 0 | 0 | 0 | 0 | 0 | 0 | 0 | 0 | 0 | 0 | 0 | 10 | 50 | 0 | 0 | 0 | 0 | 0 | 10 |
| 12 | 30.27 | 37.18 | 0 | 0 | 0 | 0 | 0 | 0 | 0 | 0 | 0 | 0 | 0 | 10 | 0 | 0 | 0 | 0 | 0 | 0 | 0 | 0 |
| 13 | 31.64 | 43.24 | 0 | 0 | 10 | 0 | 10 | 0 | 0 | 0 | 0 | 0 | 10 | 0 | 0 | 0 | 0 | 0 | 0 | 0 | 0 | 0 |
| 14 | 26.55 | 37.95 | 0 | 0 | 0 | 0 | 0 | 0 | 0 | 0 | 0 | 0 | 10 | 0 | 0 | 0 | 0 | 0 | 0 | 0 | 0 | 0 |
| 15 | 28.39 | 37.63 | 0 | 30 | 0 | 0 | 0 | 0 | 0 | 0 | 0 | 40 | 0 | 0 | 10 | 10 | 0 | 0 | 0 | 0 | 0 | 0 |
| 16 | 31.12 | 42.72 | 0 | 0 | 10 | 0 | 0 | 0 | 10 | 50 | 0 | 0 | 0 | 0 | 0 | 0 | 10 | 0 | 0 | 0 | 10 | 0 |

⋮

500

# FIG. 8A

f1 TRAINING

# FIG. 8B

f1 TEST

# FIG. 8C

f2 TRAINING

# FIG. 8D

f2 TEST

# FIG. 8E

|  | R2 (TRAINING) | R2 (TEST) |
|---|---|---|
| f1 | 1.000 | 0.999 |
| f2 | 1.000 | 0.998 |

## FIG. 9A

● CONDITION 1          ▲ CONDITION 2
✕ CONDITION 3 (1ST TIME)   ＋ CONDITION 3 (2ND TIME)

## FIG. 9B

|  | CONDITION 3 (1ST TIME) | CONDITION 3 (2ND TIME) | CONDITION 2 (ONLY 1) | CONDITION 1 (1+2) |
|---|---|---|---|---|
| HYPERVOLUME | 0.959 | 3.331 | 14.159 | 14.292 |
| NUMBER OF GENERATIONS | 250 | 250 | 250 | 486 |

FIG. 10

EP 4 293 580 A1

# FIG. 11

FIG. 12

EP 4 293 580 A1

# FIG. 13

# FIG. 14

Europäisches Patentamt

European Patent Office

Office européen des brevets

## EUROPEAN SEARCH REPORT

Application Number

EP 23 15 8752

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAKAYUKI MARUYAMA ET AL: "An Effective Robust Optimization Based on Genetic Algorithm", IEEE TRANSACTIONS ON MAGNETICS, IEEE, USA, vol. 44, no. 6, 1 June 2008 (2008-06-01), pages 990-993, XP011215341, ISSN: 0018-9464 * page 990 – page 993, right-hand column, paragraph 2 * | 1-8 | INV. G06N3/126 |
| A | EP 3 866 170 A1 (FUJITSU LTD [JP]) 18 August 2021 (2021-08-18) * the whole document * | 1-8 | |

TECHNICAL FIELDS SEARCHED (IPC)

G06N

The present search report has been drawn up for all claims

| Place of search | Date of completion of the search | Examiner |
|---|---|---|
| The Hague | 30 October 2023 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 8752

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2023

| Patent document cited in search report | | Publication date | Patent family member(s) | | Publication date |
|---|---|---|---|---|---|
| EP 3866170 | A1 | 18-08-2021 | CN | 113268126 A | 17-08-2021 |
| | | | EP | 3866170 A1 | 18-08-2021 |
| | | | JP | 2021127418 A | 02-09-2021 |
| | | | US | 2021256185 A1 | 19-08-2021 |

EPO FORM P0459

For more details about this annex : see Official Journal of the European Patent Office, No. 12/82

**REFERENCES CITED IN THE DESCRIPTION**

**Patent documents cited in the description**

- JP 2021005278 A
- JP 2020030683 A
- US 20100131439
- US 20070208691